# EUROPEAN PATENT SPECIFICATION

(11) **EP 0 614 751 B1**
(45) Date of publication and mention of the grant of the patent: **23.07.1997**
(21) Application number: 94200304.7
(22) Date of filing: 03.02.1994
(51) Int. Cl.: B29D 23/24, B29C 70/00, B29C 65/34, F16L 47/02, B29L 31/24

(54) **Method and apparatus for producing fusible junction fittings having an electric heating wire in a wall thereof**
Verfahren und Vorrichtung zum Herstellen von Schweissmuffen die mit einem elektrischen Heizdraht versehen sind
Procédé et appareil pour la fabrication de manchons soudables comportant un fil électrique dans leur paroi

(30) Priority: 11.02.1993 IT MI930239
(43) Date of publication of application: 14.09.1994
(73) Proprietor: GECO SYSTEM S.p.A., I-21052 Busto Arsizio (Varese) (IT)
(72) Inventor: Genoni, Marco, I-21050 Busto Arsizio (Varese) (IT); Zappa, Guido, I-20030 Seveso (Milano) (IT)
(74) Representative: Faraggiana, Vittorio, Dr. Ing.

(56) References cited:
- EP-A- 0 055 891
- EP-A- 0 086 359
- EP-A- 0 278 768
- EP-A- 0 286 718
- EP-A- 0 303 909
- EP-A- 0 402 199
- BE-A- 899 206
- CH-A- 483 771
- FR-A- 2 186 114
- FR-A- 2 395 661
- JP-A-1 206 026 (MITSUI PETROCHEM) & PATENT ABSTRACTS OF JAPAN vol. 13, no. 512 (M-893) 16 November 1989

## Description

The present invention relates to a method and an apparatus for producing fusible fittings for joining pipes.

In the known art fusible fittings or sleeves are known into which an electric heating resistor is incorporated, which resistor, being connected to an appropriate feeding equipment, enables melting of the fitting after the latter has been mounted to the end of ducts for connecting them, said ducts being made of an appropriate fusible material too, such as polypropylene for example. These fittings enable perfect and highly resistant junctions to be readily achieved.

However, a uniform distribution of heat over the whole volume of the fusible fitting portion is absolutely necessary in order to obtain a perfect junction, and therefore an accurate arrangement of the resistor in the fitting is of the greatest importance.

Usually, such a resistor is made in the form of a wire of a relatively high resistivity which is wound and incorporated in the thickness of the fitting wall. For incorporation of the wire in the fitting it has been first proposed to arrange the wire according to its final configuration, put it into the fitting mould and pour the plastic material thereinto.

Theoretically this method is very simple, but practically it is of difficult application. In fact, the liquid plastic material entering the mould exerts pressure on the wire deforming it and moving it from its ideal location.

In an attempt to obviate the above problem, the manufacture of the fitting by two moulding steps has been suggested. First a support for the wire is moulded, which support is generally made in the form of a sleeve having a wall of reduced thickness and provided with a spiral-shaped channel or groove on the outer surface thereof. The resistor wire is laid down into this groove and a plastics cover is subsequently moulded onto the partial sleeve thus obtained, thereby forming a coating on the grooved surface provided with the wire and obtaining a complete fitting having the wire incorporated therein. By this method displacements of the wire during the second moulding step are less likely to occur, as the wire is inserted in the guide grooves. However, in addition to the difficulty of laying down the wire precisely in the preformed groove, this method also suffers from a serious drawback.

Actually, in order to enable the wire to be inserted into the groove, said groove must necessarily have a slightly larger section than the wire. Then, due to working tolerances, the shape of the groove section cannot mate the wire conformation in a precise manner. Thus between the groove walls and the wire surface there is a variable space that, on the second moulding step, entraps air. The consequent thermal resistance prevents a homogeneous heat transmission between the conductor wire and the plastic material of the fitting. Therefore when the fitting is applied cast defects occur.

EP-A-0 055 891, EP-A-0 303 909 and JP-A-1 206 026 disclose apparatuses, in which the wire is heated by making the wire pass through heater units before being wound.

Accordingly, the object of the present invention is to obviate the above problems by providing a method and an apparatus applying said method as disclosed in claims 1 and 3, for producing fusible fittings exhibiting high qualities in terms of uniformity in the wire distribution and therefore in distributing heat produced by said wire.

In view of the above object, in accordance with the invention, a method for producing fusible junction fittings having an electric heating wire in a wall thereof has been devised, which comprises the steps of making a hollow element of a fusible material and rolling up the electric wire on the peripheral surface thereof, the wire stretch to be rolled up being heated to a temperature sufficient to enable the material of the hollow element to melt, so that said wire stretch is at least partly buried in the peripheral surface of the hollow element.

An apparatus for producing fittings has been also devised which is characterized in that it comprises means for rolling up a wire on the peripheral surface of a hollow element made of fusible material, heating means being placed along the travel path of the wire being rolled up for heating it to a temperature sufficient to cause melting of the material of the hollow element, so that the wire is buried at least partly in the peripheral surface of the hollow element itself.

For better explaining the innovatory principles of the present invention and the advantages it offers as compared to the known art, a possible embodiment of the same putting said principles into practice will be given hereinafter by way of non-limiting example with the aid of the accompanying drawings, in which:
- Fig. 1 is a diagrammatic and partial plan view of a machine for rolling up wire on a support forming the core of the fusible fitting;
- Fig. 2 is a side view of the machine shown in Fig. 1;
- fig. 3 is a longitudinal part sectional view to an enlarged scale of a complete fitting made by adopting the method herein claimed.

Referring to the drawings, according to the invention a tubular element 10, advantageously a hollow open-ended cylinder is first made. Said cylinder has the same inner diameter as that of the fitting to be obtained and a relatively thin wall (at all events thinner than the wall of the finished fitting). The outer surface of the cylinder is substantially smooth. Advantageously, the cylinder may have two radial steps 11, 12 oriented outwardly at the two ends thereof. The cylinder is moulded and made of a known fusible plastic material suitable for the sealing function required of the fitting.

The cylinder 10 is arranged on a mandrel 13 to be driven in rotation by an electric motor 14. Disposed parallelly to the cylinder axis and conveniently spaced apart therefrom is a movable carriage 15 for guiding a wire 16 to be rolled up on the periphery of the support cylinder 10. Movement of the carriage is obtained by known moving means for example comprising a screw-nut coupling (lead screw) in which a screw 17 parallel to the cylinder axis is driven by an electric motor 18. Thus a means for rolling up the wire on the cylindrical element is achieved.

On rotation of the cylinder 10 and simultaneous and synchronized running of the carriage 15, the wire is wound about the cylinder from one of its ends to the other, to form turns spaced apart the same distance from each other.

According to the present method, the wire being rolled up is heated so that it is buried in the cylinder surface. By suitably adjusting the wire traction and temperature a gauged burying (for example substantially equal to the wire diameter) is obtained so that the wire is locked to the cylinder without passing through the thickness thereof. Since the wire burying takes place by melting of the plastic material, said plastic material will perfectly conform in shape to the outer surface of the wire without leaving void spaces.

When the rolling up step is completed, the wound wire ends are cut and bent outwardly of the support. The support 10 can then be submitted to a moulding step for covering at least the outer surface thereof with a layer of plastic material (usually the same as that used for making the cylinder) and thus obtain the finished fitting which obviously may have a form different from that of a cylindrical sleeve. For example the finished fitting may be in the form of a bent fitting, a union tee or others, the cylindrical element being incorporated in the junction-by-fusion area of the fitting.

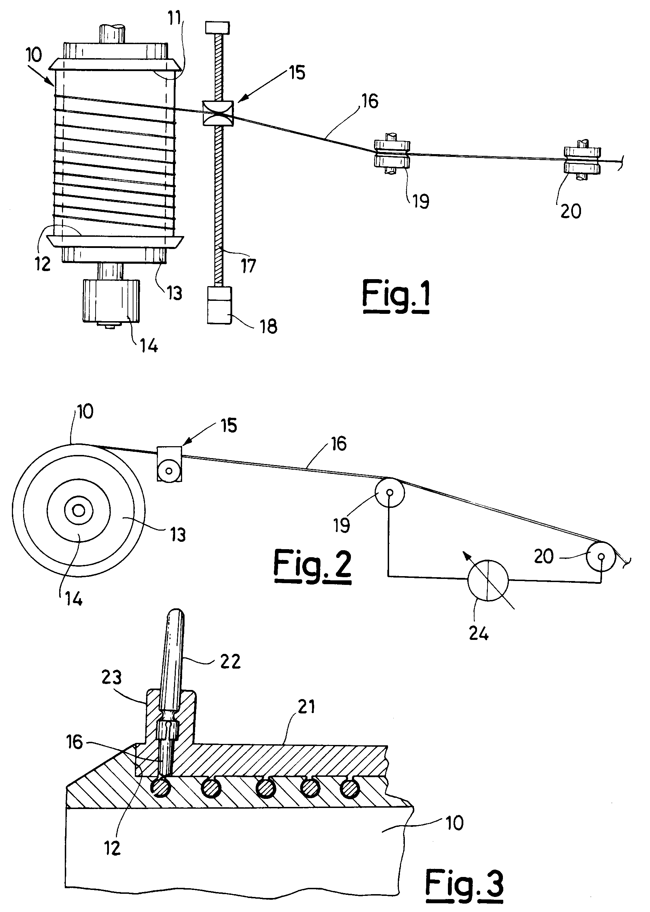

As shown in Fig. 3, steps 11 and 12 are advantageous as they offer a side holding to the layer 21 moulded on the surface 10. Since the wire is buried in the cylinder plastic material, during the moulding step it will be unable to move from the rolled up position.

In order to offer convenient connecting terminals for the fitting supply, terminals 22 clipped to the ends of the resistor formed of the wound wire can be provided.

As shown in Fig. 3, the terminals can be advantageously mounted to the wire ends before moulding of the second layer 21, so that they are partly incorporated therein and project outwardly by their connection end. The layer 21 may have reinforcing projections 23 about the exit point of the terminal 22.

While different techniques may be employed for heating the wire, an electric heating has been found advantageous because it utilizes the high-resistivity feature already present in the wire used for embodying the fitting resistor.

For the purpose, before encountering the carriage 15, the wire runs in electric contact on the electric contact elements 19, 20 located at two spaced apart positions along the wire travel path. Advantageously the two contact elements can consist of two pulleys 19, 20 made of a conductive material.

The two contact elements are connected to a current generator 24 so that the wire stretch therebetween is passed through by a predetermined electric current. The current intensity and the wire stretch length are calculated in such a way that, given the wire resistivity value, an appropriate heating of the wire stretch is generated which is sufficient to cause melting of the cylinder plastic material when the wire is subsequently rolled up.

Obviously, the length of the wire stretch being equal, current will depend on the running speed of the wire and ultimately on the rotational speed and diameter of the cylinder. Therefore the generator will advantageously be a variable generator in order to keep a proportionality between current intensity and running speed of the wire.

By providing a variable current generator 24 it is therefore possible to make the rolling up machine adapted to produce fittings of different diameters and having wires exhibiting different electric resistance features per unit length.

At this point it is apparent that the intended purposes have been achieved by providing a method and an apparatus for producing fusible fittings having high and homogeneous features.

Obviously, the above description applying the innovatory principles of the invention is given for purposes of illustration only and therefore must not be considered as a limitation of the scope of the invention as herein claimed.

For example, the rolling up machine may comprise other known devices, such as mechanisms for adjusting the wire traction, wire cutting means, etc. In addition, the second moulding step may concern other parts of the cylinder besides the outer surface thereof. For example, the second moulding may cover the cylinder surfaces completely, thereby forming an outer shell.

## Claims

1. A method for producing fusible junction fittings having an electric heating wire in a wall thereof, which comprises the steps of making a hollow element of a fusible material and rolling up the electric wire on the peripheral surface thereof, the wire stretch to be rolled up being heated to a temperature sufficient to enable the material of the hollow element to melt, so that said wire stretch is at least partly buried in the peripheral surface of the hollow element by means of the heated wire tension, characterized in that heating of the wire stretch is achieved by an electric current passing through a length of wire before being rolled up on the hollow element.

2. A method according to claim 1 which, after burying of the wire, comprises the further step of moulding at least on the peripheral surface of the support element a covering coating of fusible material leaving the wound wire ends outwardly.

3. An apparatus for producing fusible junction fittings having an electric heating wire in a wall thereof, comprising means (13, 15) for rolling up a wire (16) on the peripheral surface of a hollow element (10) made of fusible material, heating means (19, 20, 24) being placed along the travel path of the wire (16) being rolled up for heating it to a temperature sufficient to cause melting of the material of the hollow element (10), so that the wire is buried at least partly in the peripheral surface of the hollow element itself, characterized in that the heating means comprises a pair of spaced apart electric contact elements (19, 20) on which the wire supplied to the rolling up means runs, an electric current generator (24) being connected between said contact elements for enabling said current to flow through the wire stretch (16) running between the pair of contact elements (19, 20), before being rolled up on the hollow element.

4. An apparatus according to claim 3, characterized in that the rolling up means comprises a power driven mandrel (13) driving the hollow element (10) in axial rotation and guide means (15) for the wire, said means being movable axially of the hollow element (10) for feeding said hollow element with wire which is disposed thereon in spaced apart turns.

5. An apparatus according to claim 1, characterized in that the contact elements (19, 20) are rollers on which the wire runs.

6. An apparatus according to claim 4, characterized in that the wire guiding means comprises a guide carriage (15) which is movable along a power driven guide (17) disposed parallel to the hollow element axis.

7. An apparatus according to claim 1, characterized in that the current generator (24) is of a variable type and can be adjusted for keeping a proportionality between the current intensity and running speed of the wire between the contact elements.

8. An apparatus according to claim 3, characterized in that the hollow element is of cylindrical form.

## Patentansprüche

1. Verfahren zum Herstellen von schmelzbaren Anschlußstücken, die einen elektrischen Heizdraht in ihrer einen Wand aufweisen, das die Schritte des Herstellens eines hohlen Elements aus einem schmelzbaren Material und des Aufrollens des elektrischen Drahtes auf seine Umfangsoberfläche umfaßt, wobei die aufzurollende Drahtstrecke auf eine Temperatur erwärmt wird, die ausreicht, um das Schmelzen des Materials des hohlen Elements zu ermöglichen, so daß die Drahtstrecke wenigstens teilweise in die Umfangsoberfläche des hohlen Elements mittels der erwärmten Drahtspannung eingegraben wird, dadurch gekennzeichnet, daß das Erwärmen der Drahtstrecke durch einen elektrischen Strom erreicht wird, der durch ein Stück des Drahtes hindurchgeht, bevor er auf das hohle Element aufgerollt wird.

2. Verfahren nach Anspruch 1, das nach dem Eingraben des Drahtes den weiteren Schritt des Formens einer abdeckenden Beschichtung aus schmelzbarem Material, die die Enden des aufgewickelten Drahtes außerhalb läßt, auf wenigstens der Umfangsoberfläche des Tragelements umfaßt.

3. Vorrichtung zum Herstellen von schmelzbaren Anschlußstücken, die einen elektrischen Heizdraht in ihrer einen Wand aufweisen, die Mittel (13, 15) zum Aufrollen eines Drahtes (16) auf der Umfangsoberfläche eines aus schmelzbarem Material bestehenden, hohlen Elements (10) und Heizmittel (19, 20, 24) umfaßt, die entlang des Weges der Bewegung des Drahtes (16), der aufgerollt wird, angeordnet sind, um ihn auf eine Temperatur zu erwärmen, die ausreicht, ein Schmelzen des Materials des hohlen Elements (10) zu bewirken, so daß der Draht wenigstens teilweise in die Umfangsoberfläche des hohlen Elements selbst eingegraben wird, dadurch gekennzeichnet, daß die Heizmittel ein Paar mit Abstand voneinander angeordneter Elemente (19, 20) für den elektrischen Kontakt, auf denen der den Aufrollmitteln zugeführte Draht läuft und einen elektrischen Stromgenerator (24) umfassen, der zwischen den Kontaktelementen angeschlossen ist, um zu ermöglichen, daß der Strom durch die Drahtstrecke (16) fließt, die zwischen dem Paar von Kontaktelementen läuft (19, 20), bevor sie auf das hohle Element aufgerollt wird.

4. Vorrichtung nach Anspruch 3, dadurch gekennzeichnet, daß die Aufrollmittel eine Spindel (13) mit Motorantrieb, die das hohle Element (10) zur axialen Drehung antreibt, und Führungsmittel (15) für den Draht umfassen, wobei die Mittel axial zum hohlen Element (10) bewegbar sind, um dem hohlen Element Draht zuzuführen, der darauf in mit Abstand voneinander eingeordneten Windungen angeordnet wird.

5. Vorrichtung nach Anspruch 1, dadurch gekennzeichnet, daß die Kontaktelemente (19, 20) Rollen sind, auf denen der Draht läuft.

6. Vorrichtung nach Anspruch 4, dadurch gekennzeichnet, daß die Drahtführungsmittel einen Führungswagen (15) umfassen, der entlang einer Führung (17) mit Motorantrieb beweglich ist, die parallel zur Achse des hohlen Elements angeordnet ist.

7. Vorrichtung nach Anspruch 1, dadurch gekennzeichnet, daß der Stromgenerator (24) vom variablen Typ ist und zur Beibehaltung einer Proportionalität zwischen der Stromstärke und der Laufgeschwindigkeit des Drahtes zwischen den Kontaktelementen eingestellt werden kann.

8. Vorrichtung nach Anspruch 3, dadurch gekennzeichnet, daß das hohle Element Zylinderform hat.

## Revendications

1. Procédé pour la fabrication de manchons soudables ou raccords fusibles ayant un fil de chauffage électrique dans une paroi, procédé qui comprend les étapes consistant à réaliser un élément creux d'un matériau fusible et à enrouler le fil électrique sur sa surface périphérique, le tronçon de fil à enrouler étant chauffé à une température suffisante pour permettre la fusion du materiau de l'élément creux de sorte que ce tronçon de fil est au moins partiellement noyé dans la surface périphérique de l'élément creux au moyen de la tension de fil chauffé, caractérise en ce que le chauffage du tronçon de fil s'effectue par un courant éléctrique traversant une longueur de fil avant son enroulement sur l'élément creux.

2. Procédé selon la revendication 1, lequel, après noyage du fil, comprend l'étape supplémentaire consistant à mouler au moins sur la surface périphérique de l'élément de support un revêtement de matériau fusible laissant les extrémités de fil enroulé à l'extérieur.

3. Appareil pour la fabrication de manchons soudables comportant un fil de chauffage électrique dans sa paroi, comprenant des moyens (13, 15) pour enrouler un fil (16) sur la surface périphérique d'un élément creux (10) réalisé à partir d'un matériau fusible, des moyens de chauffage (19, 20, 24) étant disposés le long du trajet du fil (16) enroulé pour son chauffage à une température suffisante pour faire fusionner le matériau de l'élément creux (10) de sorte que le fil est noyé au moins partiellement dans la surface périphérique de l'élément creux lui-même, caractérisé en ce que les moyens de chauffage comprennent une paire d'éléments de contact électrique espacés entre eux (19, 20) sur lesquels chemine le fil amené sur les moyens d'enroulement, un générateur de courant électrique (24) étant connecté entre ces éléments de contact pour permettre au courant de traverser le tronçon de fil (16) cheminant entre la paire d'éléments de contact (19, 20) avant d'être enroulé sur l'élément creux.

4. Appareil selon la revendication 3, caractérisé en ce que les moyens d'enroulement comprennent un mandrin entraîné électriquement (13) entraînant l'élément creux (10) en rotation axiale et des moyens de guidage (15) pour Le fil, ces moyens étant mobiles axialement par rapport à l'élément creux (10) pour alimenter l'élément creux avec le fil qui est disposé sur celui-ci selon des spires espacées entre elles.

5. Appareil selon la revendication 1, caractérisé en ce que les éléments de contact (19, 20) sont des rouleaux sur lesquels chemine le fil.

6. Appareil selon la revendication 4, caractérisé en ce que les moyens de guidage de fil comprennent un chariot de guidage (15) qui est mobile le long d'un guidage entraîné électriquement (17) disposé parallèlement à l'axe de l'élément creux.

7. Appareil selon la revendication 1, caractérisé en ce que le générateur de courant (24) est de type variable et peut être ajusté pour maintenir une proportionnalité entre l'intensité de courant et la vitesse de déplacement du fil entre les éléments de contact.

8. Appareil selon la revendication 3, caractérisé en ce que l'élément creux est de forme cylindrique.
